# EUROPÄISCHE PATENTSCHRIFT

(11) **EP 1 126 198 B1**
(45) Veröffentlichungstag und Bekanntmachung des Hinweises auf die Patenterteilung: **12.05.2004**
(21) Anmeldenummer: 01101201.0
(22) Anmeldetag: 19.01.2001
(51) Int. Cl.: F16H 61/24, F16H 63/38

(54) **Schaltvorrichtung eines Wechselgetriebes mit Dämpfungselement und Schaltwegbegrenzung**
Shift device for speed-change gearing with damping element and shifting travel abutment
Dispositif de changement de vitesses pour les boîtes de vitesses avec élément d'amortissement et butée de mouvement de sélection

(30) Priorität: 15.02.2000 DE 10006721
(43) Veröffentlichungstag der Anmeldung: 22.08.2001
(73) Patentinhaber: INA-Schaeffler KG, 91074 Herzogenaurach (DE)
(72) Erfinder: Wildeshaus, Walter, 91074 Herzogenaurach (DE); Landa, Boris, 91088 Bubenreuth (DE); Grieshammer, Andreas, 90429 Nürnberg (DE); Steinberger, Wolfgang, 91074 Herzogenaurach (DE); Winkler, Manfred, 91086 Aurachtal (DE); Schübel, Rainer, 91522 Ansbach (DE)

(56) Entgegenhaltungen:
- DE-A- 4 110 555
- DE-A- 19 805 924

## Beschreibung

### Gebiet der Erfindung

Die Erfindung betrifft eine Schaltvorrichtung eines Wechselgetriebes mit einem längsverschiebbaren und/oder um seine Längsmittelachse schwenkbaren Übertragungselement zum Übertragen von Schaltbewegungen, wie z. B. einer Schaltwelle, und wenigstens einem Anschlag, wobei das Übertragungselement zumindest durch Längsverschiebung oder Schwenken um seine Längsmittelachse in mindestens eine Endlage zum Wechselgetriebe bewegbar ist und in zumindest einer Endlage gegen den Anschlag fährt.

### Hintergrund der Erfindung

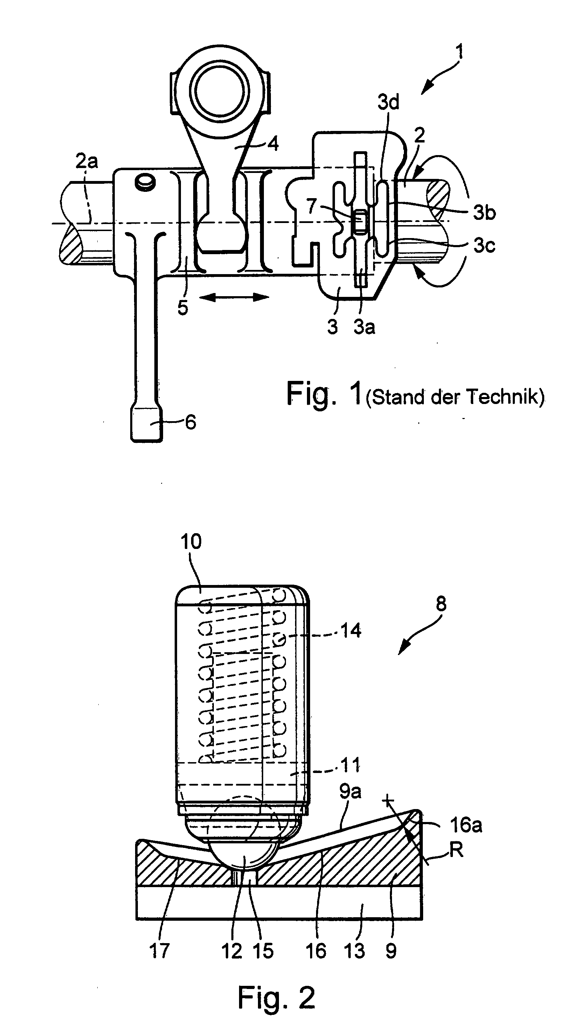

Werden längs- und/oder dreh- bzw. schwenkbeweglich angeordnete Elemente bzw. Baugruppen in ihrer Längs- oder Schwenkbewegung durch einen mechanischen Anschlag begrenzt, entstehen neben hohen Belastungen der Bauteile auch Geräusche, wenn das bewegte Element auf den Anschlag auftrifft. Zu derartigen Elementen gehörten z. B. Schaltwellen in Wechselgetrieben von Kraftfahrzeugen. Die Schaltwellen werden für Wähl- und Schaltbewegungen in Längsrichtung bewegt oder um eine Schwenkachse geschwenkt und übertragen mittels eines oder mehrerer Übertragungselemente, beispielsweise auf eine Schaltschiene, Schaltgabel oder Schaltschwinge, Schaltbewegungen. Der Weg der Schaltwellen muss für die Wähl- und/oder Schaltbewegungen begrenzt sein. Die Schaltwellen werden nach dem Übertragen einer Wählbewegung mittels der Schaltbewegung in eine Endlage bewegt, in der der gewählte Gang eingelegt ist. Auch eine Wählstellung kann am Ende einer Gasse in einer Endlage enden. Der Schalt- bzw. Wählweg in den Endlagen von Schaltwellen ist oft durch Anschläge begrenzt. Die Schaltwellen oder Schaltschienen können gehäusefest oder an einer Kulisse anschlagen, dabei dient die Begrenzungskontur eines Gehäuses oder einer Kulisse als Anschlag bzw. Wegbegrenzung. Der Weg einer Schaltwelle in axialer Richtung und/oder in Schwenkrichtung kann mittels eines in der Kulisse entlangfahrenden und in den Endlagen an der Kulissenkontur anstoßenden Stiftes oder ähnlichem festgelegt sein. *Eine derartige Schalteinrichtung mit einer Schaltkulisse aus der Produktübersicht der Firma INA Wälzlager Schaeffler oHG "Anwendungsbeispiele - Produkte für die Schaltung in KFZ-Getrieben" Ausgabe Juni* 1992, *ist nachfolgend in Figur 1 dargestellt.* Die Abfolge von Schaltvorgängen erzeugt häufig ein schlagartiges Abbremsen des Übertragungselementes in der Schaltvorrichtung auf die Anschläge. Schwingungen werden erzeugt und damit Geräusche.

In der Vergangenheit hat man zur Vermeidung der vorgenannten unerwünschten Geräusche verschiedene Dämpfungselemente in Schaltvorrichtungen eingesetzt. WO 90/03523 beschreibt z. B. eine Schaltwelle mit einer Dämpfungseinrichtung, bei der Luft als Dämpfungsmedium genutzt ist. Eine Schaltschwinge wird mittels der Schaltwelle betätigt, indem die Schaltwelle selbst über einen durch Druckluft belasteten Kolben in Axialrichtung in verschiedene Endlagen verschoben wird. Bei Erreichen der Endlagen taucht der Kolben in einen Gegendruckraum ein. Dabei entweicht durch den axial verschobenen Kolben beaufschlagte Luft langsam über Drosselbohrungen. Mechanisches Anschlagen ist damit verhindert. Die vorstehend erwähnte Schaltwelle und somit auch die Schaltschwingen sind in den Endlagen durch Arretierelemente arretiert. Die Arretierelemente arretieren die Schaltwelle in den Endlagen, indem sie mit einer federbelasteten Kugel oder einem Bolzen in eine Vertiefung der Schaltwelle eingreifen. Die Vertiefungen sind in Längsrichtung durch rampenartig ausgebildete Flanken begrenzt. Wenn die Schaltwelle aus einer der Endlagen in eine andere Endlage axial bewegt wird, steigt die Kugel an einer der Flanken auf, bewegt sich auf einer Laufbahn und fährt an einer anderen Flanke hinab in eine andere Vertiefung. Durch Druckluft gedämpfte Einrichtungen sind relativ aufwendig in ihrer Herstellung und hinsichtlich der Vielzahl der verwendeten Einzelteile und es ist das Vorhandensein einer Versorgung mit Druckluft sowie weiterer damit zusammenwirkender Elemente Voraussetzung. Derartige Dämpfungselemente werden zumeist nur an druckluftbetätigten oder unterstützten Schaltgetrieben für Nutzkraftfahrzeuge eingesetzt. Insbesondere bei von Hand geschalteten Wechselgetrieben in PKW's kann deshalb auf mechanische Anschläge nicht verzichtet werden. Zwischen den Anschlägen und dem anschlagenden Teil ist als Dämpfungsmittel Gummi oder Kunststoff eingesetzt. Der Gummi bzw. der Kunststoff verhindern oder mindern die mechanische Anregung von Schwingungen, die zu den Geräuschen führt.

Das Einlegen eines Ganges über eine längsverschiebbare sowie schwenkbare Schaltwelle erfolgt in der Regel in zwei Stufen. In der ersten Stufe, dem Wählen, ist ein axiales Verschieben der Schaltwelle in eine Endposition vorgesehen. Ein mit der Schaltwelle verbundener Schaltfinger oder ein ähnliches Element wird damit in seine Ausgangsstellung gebracht. Aus dieser Ausgangsstellung wird in der zweiten Stufe mittels des Schaltfingers und weiterer Elemente durch Schwenken der Schaltwelle der Gang geschaltet. Umgekehrt kann auch die erste Stufe durch eine Schwenkbewegung und in der zweiten Stufe das Schalten eines Ganges durch eine Längsbewegung ausgelöst sein. Wenn die Schaltwelle in der ersten Stufe axial in eine der Endpositionen gebracht wird, schlägt sie dabei häufig axial an einem Anschlag an. Ein Dämpfungselement aus Gummi oder Kunststoff ist unter Umständen zwischen der Schaltwelle zum bekannten Zweck angeordnet. Beim Schwenken der Schaltwelle während der zweiten Stufe des Schaltvorganges reibt die Schaltwelle an dem Dämpfungselement. Insbesondere wenn das Dämpfungselement aus einem Gummiwerkstoff hergestellt ist, muss die Schaltwelle aufgrund der Reibungskräfte mit vergrößerter Kraft betätigt werden. Häufig spürt die Bedienperson diesen Effekt anhand von ungleichmäßigen und damit unerwünscht unsteten Schaltkräften.

Bei Schaltwellen, in denen die Begrenzungskontur einer Kulisse gleichzeitig als Anschlag bzw. Wegbegrenzung der Schaltwelle dient, sind teilweise keine Dämpfungsmittel vorgesehen. Hier nimmt man das mit dem Anschlagen verbundene mechanische Geräusch häufig in Kauf.

Eine Schaltwelle der gattungsbildenden Art ist in DE 198 05 924 A1 beschrieben. Die Schaltwelle trägt eine Rastierhülse sowie Schaltfinger und ist axialverschiebbar gelagert. An der Rastierhülse sind eine Rastkontur sowie eine Kulisse ausgebildet. Auf die Rastkontur wirkt ein relativ zur Längsmittelachse bewegungsfest angeordnetes Arretierelement. Mittels der Rastkontur und des Arretierelementes wird die Schaltwelle entweder in einer Neutralstellung oder in einer von mehreren Endpositionen gehalten. Das Arretierelement greift dazu in Vertiefungen ein. Die Rastkontur ist so ausgebildet, dass an der Mantelfläche der Rastierhülse in Längsrichtung drei Längsnuten verlaufen, die in Umfangsrichtung zueinander benachbart sind. Der Nutgrund der Längsnuten steigt in seinem Verlauf jeweils in jede Längsrichtung von einer Vertiefung weg rampenförmig oder kurvenförmig relativ flach an. Bei Kräften an der Schaltwelle, die Längsbewegungen in die eine oder die andere Richtung verursachen, steigt die senkrecht zur Längsmittelachse der Schaltwelle federbelastete Kugel aus der Vertiefung an dem Nutgrund auf. Entfallen diese Kräfte, wirkt die senkrechte Federkraft, die Kugel rollt in Richtung Vertiefung der Nut und die Schaltwelle wird in die Neutralstellung zurückbewegt. Die in Umfangsrichtung zwischen den zwei äußeren Längsnuten angeordnete Längsnut weist Querflanken auf, die vom Nutgrund relativ steil zum Nutrand hin ansteigen. Von dort gehen die Querflanken über eine Rundung in die relativ steil abfallenden Querflanken der benachbarten Längsnut über. Bei Schaltbewegungen an der Schaltwelle, d. h. beim Schwenken, überwindet die Kugel des Arretierelementes die Rundung bis die Kugel in der benachbarten Längsnut einschnappt. Die Schaltwelle ist in einer geschaltenen Stellung eines Ganges arretiert. Mit unterschiedlichen Steigungen der Flanken bzw. des Nutgrundes werden unterschiedliche Betätigungskräfte für das Verschieben bzw. Schwenken der Schaltwelle erzeugt.

Die notwendige Begrenzung des Wählweges und des Schaltweges der gattungsbildenden Schaltwelle ist durch die Kontur der Kulisse realisiert. In die an der Rastierhülse ausgebildete Kulisse greift ein Stift ein. Die Kulisse ist durch eine sich in Längsrichtung der Schaltwelle erstreckende Nut versehen, in die mehrere in Querrichtung verlaufende Nuten münden. Die durch die Wandung der Rastierhülse begrenzten blinden Enden der Nuten sind die Anschläge, an denen die Schaltwelle in ihren Endpositionen mittels des Stiftes ungedämpft anstößt.

*Gattungsgemäßer DE 41 10 555 A1 beschreibt einen mit einer Schaltwelle längsverschiebbaren und schwenkbare Schaltzylinder und weist eine als Führung ausgelegte Schaltkulisse auf. Die Schaltkulisse ist aus Anlaufprofilen für ein Rastelement mit sich über den Umfangsbereich des Schaltzylinders erstreckenden Vertiefungen und sich den Vertiefungen anschließenden Flanken gebildet. Das Rastelement läuft an dem Anlaufprofil mit einer federnd vorgespannten Rastkugeln an. Die in DE 41 10 555 A 1 beschriebenen Rastvertiefungen sind zum Verrasten der Rastelemente in Schaltstellungen, aus denen die Rastelemente durch Längsverschieben oder durch Schwenken über Rampen hinaus in nächste Vertiefungen oder Führungsbahnen bewegbar sind, vorgesehen. Die Flanken der nutförmigen Vertiefungen für die Gangwahl sind dabei unterschiedlich steil, um die Vorwählkräfte zur weiteren Verbesserung der Schaltpräzision zu erhöhen.*

*DE 41 10 555 A 1 definiert durch unterschiedlich steile diese lediglich Vorwählkräte bzw. Schaltkräfte und arretiert mit den in die Vertiefungen eingreifenden Rastelementen die Schaltwelle in bestimmten Schaltstellungen oder in der Neutralstellung. Die Anschläge für das Begrenzen von Schwenk- und axialen Bewegungen der Schaltwelle und damit für den die Anlaufprofile aufweisenden Schaltzylinder sind in dieser Vorrichtung für einen am Schaltzylinder ausgebildeten Schaltfinger an ortsfesten Einrichtungen im Getriebe oder im Getriebegehäuse vorgesehen.*

Anforderungen an moderne Kraftfahrzeuge sind gestiegen. Gestiegenes Umweltbewußtsein und gesteigerte Komfortansprüche von Kunden verlangen, dass alle Geräuschquellen so weit wie möglich eliminiert werden.

### Zusammenfassung der Erfindung

Aufgabe der Erfindung ist es daher, eine Schaltvorrichtung zu schaffen, deren längsverschiebbare, schwenkbare oder längs- bzw. schwenkbewegliche Übertragungselemente während der Wähl- und/oder Schaltbewegungen keine störenden Geräusche erzeugen, wenn sie auf Anschläge auftreffen.

Diese Aufgabe wird nach dem kennzeichnenden Teil des Anspruches 1 dadurch gelöst, dass *die Schaltvorrichtung eines Wechselgetriebes mit einem längsverschiebbar* *und*/*oder um seine Längsmittelachse schwenkbaren Übertragungselement zum Übertragen von Schaltbewegungen und wenigstens einem Anschlag, wobei das Übertragungselement wenigstens durch Längsverschiebung oder Schwenken um seine Längsmittelachse in mindestens eine Endlage zum Wechselgetriebe bewegbar ist und in zumindest einer Endlage gegen den Anschlag fährt*.

Das Anlaufprofil ist z. B. an dem Übertragungselement befestigt. Das gegen das Anlaufprofil vorgespannte Rollelement ist dann gehäusefest aufgenommen und geführt. Ein federndes Element, beispielsweise eine Druckfeder, spannt das Rollelement so gegen das Anlaufprofil vor, dass das Rollelement auf dem Anlaufprofil abrollen kann. Für eine derartige Anwendung ist auch der Einsatz des bekannten federbelasteten und in einer gehäusefest angeordneten Hülse geführten Arretierbolzen vorteilhaft, der, wie anfangs beschrieben, auch eine Schaltwelle in ihrer Neutralstellung bzw. in ihren Schaltstellungen arretiert. Das Rollelement ist in diesem Falle durch die üblicherweise in dem Bolzen aufgenommene Kugel gebildet. Denkbar ist auch, dass das Rollelement an dem Übertragungselement angeordnet ist und das Anlaufprofil einen gehäusefesten Sitz hat. Das Rollelement rollt vorgespannt auf dem Anlaufprofil ab, wenn sich das Übertragungselement in Richtung Anschlag bewegt. Der Querschnitt des Anlaufprofiles entlang der Linie, auf welcher das Rollelement bei dieser Bewegung abrollt, ist durch eine Steigung in Abrollrichtung des Rollelementes gekennzeichnet. Unter ansteigend verlaufender Konturlinie ist dabei sowohl ein linearer, ein degressiver als auch ein progressiver ansteigender Verlauf der Konturlinie zu verstehen. Mit zunehmendem Abrollweg des Rollelementes auf dem Anlaufprofil gilt es aufgrund der Steigung zunehmende Kräfte auf das Übertragungselement aufzubringen. Das Übertragungselement wird also gebremst. Die Kräfte, die zum Bewegen des Übertragungselementes notwendig sind, werden um so höher, je mehr das Übertragungsprofil in die Nähe seiner Endlage und damit des Anschlages kommt. Durch die Gestaltung des Anstieges und die Krümmung der Konturlinie des Anlaufprofiles sind die Kräfte gezielt von sportlich hart bis komfortabel weich bestimmbar. Bevorzugte Ausgestaltungen der Erfindung sehen vor, dass die Konturlinie progressiv ansteigt oder zuerst rampenartig verläuft sowie an ihrem Ende in einer nach außen verlaufenden Krümmung ausläuft. Dabei ist die Konturlinie so gestaltbar, dass ab einem bestimmten Weg und einer bestimmten sehr steilen Krümmung die Kräfte zum Bewegen des Übertragungselementes auf den Anschlag zu so hoch werden, dass sie einem mechanischen Anschlag gleichkommen. In diesem Falle stoßen keine metallischen Elemente aufeinander. Die Schwingungsanregung bleibt aus. Das Geräusch wird vermieden. Die zuletzt genannte Konturlinie, die rampenartig verläuft und an ihrem Ende in einer nach außen verlaufenden Krümmung ausläuft, ist weiterhin dadurch ausgestaltet das diese Krümmung durch einen Radius beschrieben ist. Der Radius ist dabei gleich oder größer dem Radius des Rollelementes.

Mit einer Dämpfungseinheit nach der Erfindung ist es in Zukunft auch möglich, Schaltvorrichtungen bei denen die Konturen einer Kulisse die Anschläge bilden geräuscharm zu gestalten. Gleichzeitig ist die Erfindung für die Anwendung einsetzbar, in denen längs- und/oder dreh- bzw. schwenkbeweglich angeordnete Elemente, insbesondere Elemente in Schaltvorrichtungen, in ihrem Weg durch Anschläge begrenzt werden müssen.

Die Rampenkontur ist generell so abgestimmt, dass das Übertragungselement in sehr gedämpfter Form auf den mechanischen Anschlag auftrifft oder das aufgrund der entstehenden Kräfte ein mechanischer Anschlag nicht unbedingt notwendig ist. Wenn mit Gestaltung der Konturlinie des Anlaufprofiles ein zusätzlicher mechanischer Anschlag für das Übertragungselement entfallen kann, ist es vorteilhaft den Auslauf der Konturlinie mit dem anfangs erwähnten Radius, der gleich oder größer dem Rollradius des Rollelementes ist zu versehen. Zwischen dem Rollelement und der Konturlinie entsteht dann eine Schmiegung, mit der günstige Pressungsverhältnisse zwischen dem Rollkörper und der Laufbahn der Anlaufkontur gestaltbar sind.

Das Anlaufprofil ist durch Prägen oder mechanische Bearbeitung in beliebig geeignete Werkstoffe einbringbar, jedoch bevorzugt in Stahl ausgebildet. Für seine Gestaltung sind spanabhebende Prozesse, Erodieren aber auch spanlose Prozesse, wie z. B. Prägen oder Ziehen einsetzbar. Eine bevorzugte Ausgestaltung der Erfindung sieht vor, dass das Anlaufprofil in einem durch einen Umformprozeß gestalteten Blechteil ausgebildet ist. Das Blechteil ist einzeln hergestellt, oder in einem komplexen Blechteil, wie z. B. einer Rastierhülse, integriert. Das Blechteil ist mit dem Übertragungselement, wie z. B. einer Schaltwelle, verschweißbar. Als Einzelteile gefertigte Anlaufprofile sind auch unabhängig von den Bearbeitungsprozessen der anderen Elemente der Schaltvorrichtung auf die eigenen Erfordernisse abgestimmt härtbar.

Eine weitere Ausgestaltung der Erfindung sieht vor, dass das Dämpfungselement durch ein erstes Anlaufprofil, ein zweites Anlaufprofil und einem federnd gegen die Anlaufprofile vorgespannten Rollelement gebildet ist. Das erste Anlaufprofil ist dabei zumindest in eine Längsrichtung entlang einer ersten Linie, auf welcher das Rollelement bei Längsbewegungen des Übertragungselementes gegen einen ersten Anschlag abrollt, durch eine in Abrollrichtung ansteigend verlaufende erste Konturlinie begrenzt. Das zweite Anlaufprofil ist zumindest in eine Schwenkrichtung entlang einer zweiten Linie, auf welcher das Rollelement bei Schwenkbewegungen des Übertragungselementes gegen einen zweiten Anschlag abrollt, durch eine in Abrollrichtung ansteigend verlaufende Konturlinie begrenzt. Umgekehrt kann das erste Anlaufprofil in einer Schwenkrichtung durch eine der vorab beschriebenen Konturlinien begrenzt sein und das zweite Anlaufprofil eine in Längsrichtung ansteigende Konturlinie aufweisen. Eine derartige Gestaltung des Dämpfungselementes ist insbesondere für die Anwendung von längsverschiebbaren und schwenkbaren Schaltwellen geeignet. Es ist vorstellbar, die Anlaufkonturen in die Rastierhülse oder eine gesondert auf der Schaltwelle angeordneten Schalthülse zu integrieren. Das erste Anlaufprofil sorgt dabei für die Erhöhung der Verschiebekraft am Übertragungselement und damit für die Dämpfung des Aufschlagen an dem Anschlag in Längsrichtung. Das zweite Anlaufprofil sichert eine Dämpfung ab, wenn das Übertragungselement beim Schwenken gegen einen Anschlag trifft. Das erste Anlaufprofil und das zweite Anlaufprofil sind bevorzugt an einem gemeinsamen Profilelement ausgebildet. An diesem gemeinsamen Profilelement ruht das Rollelement in einer Ausgangsstellung und bewegt sich dann je nach dem, ob das Übertragungselement längsverschoben oder geschwenkt ist auf dem ersten oder dem zweiten Anlaufprofil. Der Verlauf den Konturlinie, auf der das Rollelement bei der Bewegung des Übertragungselementes auf den Anschlag zu abrollt, ist wieder mit ansteigendem Verlauf nach den vorher genannten Gestaltungsregeln gestaltet.

Insbesondere bei der Verwendung eines Arretierbolzens als Träger des Rollelementes aber auch bei dem Einsatz eines Dämpfungselementes mit einem ersten und einem zweiten Anlaufprofil ist bevorzugt als Rollelement eine Kugel einzusetzen.

Schließlich ist mit einer Ausgestaltung der Erfindung vorgesehen, dass das Anlaufprofil den Anschlag aufweist. Dieser Anschlag wiederum ist vorzugsweise durch die Gestaltung der Konturlinie, beispielsweise durch vorgenannte Schmiegung, oder als gesonderte "Überdrücksicherung" zu gestalten. Mit einer Überdrücksicherung, beispielsweise einem festen mechanischen Anschlag am Ende der Konturlinie ist sichergestellt, dass eine Fehlbedienung durch Aufbringen sehr hoher Kräfte zum Verfehlen der Endlage bzw. zum Überschreiten der Schaltwegbegrenzung führt.

### Kurze Beschreibung der Zeichnung

Die Erfindung wird nachfolgend anhand von einem Ausführungsbeispiel erläutert. Es zeigen:
- Figur 1: eine schematische Darstellung einer längsverschiebbaren und schwenkbaren Schaltwelle mit einer Kulisse nach dem Stand der Technik;
- Figur 2: ein Ausführungsbeispiel eines erfindungsgemäßen Dämpfungselementes;
- Figur 3: eine Draufsicht auf das Anlaufprofil des Dämpungselementes nach Figur 2;
- Figur 4: eine Seitenansicht des Dämpfungselementes nach Figur 2 mit einem Teilschnitt des Anlaufprofiles;
- Figur 5: das Dämpfungselement nach Figur 2 mit der Endstellung seines Rollelementes am Anlaufprofil bei Verschieben in Längsrichtung und
- Figur 6: das Dämpfungselement nach Figur 2 mit einer Endstellung seines Rollelementes nach einer Schwenkbewegung.

### Detaillierte Beschreibung der Zeichnungen

In Figur 1 ist mit 1 eine Schaltvorrichtung nach dem Stand der Technik dargestellt. Diese Darstellung der Schaltvorrichtung 1 ist der Produktübersicht der Firma INA Wälzlager Schaeffler oHG "Anwendungsbeispiele - Produkte für die Schaltung in KFZ-Getrieben" Ausgabe Juni 1992 auf Seite 17 entnommen. Die Schaltvorrichtung 1 weist eine Schaltwelle 2, eine Kulisse 3 und einen Hebel 4 zum Betätigen einer nicht weiter dargestellten Schaltschwinge auf. An der Schaltwelle 2 ist eine Führung 5 für den Hebel 4, ein Schaltfinger 6 und ein Stift 7 ausgebildet. Der Stift 7 greift in die Kulisse 3a der Kulissenführung 3 ein. Die Schaltwelle 2 ist in beide Richtungen längsverschiebbar in einem nicht dargestellten Getriebegehäuse gelagert. Zusätzlich ist die Schaltwelle 2 um ihre Längsmittelachse 2a schwenkbar.

Die Schaltvorrichung 1 ist in Figur 1 in Neutralstellung der Schaltwelle 2 dargestellt. Die Kulissenführung 3 ist gehäusefest angeordnet. Die Schaltwelle 2 kann soweit längsverschoben werden, bis der Stift 7 an dem Anschlag 3b der Kulisse 3a anstößt. Der Wählvorgang ist abgeschlossen. Durch Schwenken der Schaltwelle 2 erfolgt das Schalten in die eine oder andere Richtung, also in Richtung eines Anschlages 3c oder eines Anschlages 3d. Bei Erreichen eines dieser Anschläge 3c, 3d ist der Schaltvorgang abgeschlossen, das Übertragungselement, in diesem Falle die Schaltwelle 2, befindet sich in einer Endlage. Der gewählte Gang ist damit eingelegt.

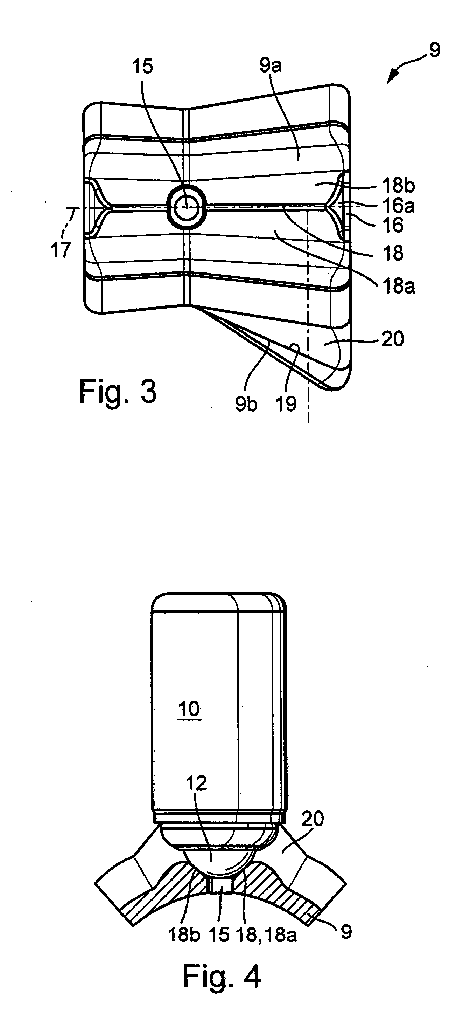

Figur 2 zeigt ein Ausführungsbeispiel eines erfindungsgemäßen Dämpfungselementes 8. Das Dämpfungselement 8 besteht aus einem Blechteil 9 mit einem ersten Anlaufprofil 9a und einer Arretierung 10. Die Arretierung 10 nimmt in einem gestrichtelt dargestellten Bolzen 11 ein als Kugel gestaltetes Rollelement 12 auf. Der Bolzen 11 und damit das Rollelement 12 sind mittels einer Feder 14 gegen das erste Anlaufprofil 9a vorgespannt. An dem ersten Anlaufprofil 9a ist ein Sitz 13 für die Befestigung an einem nicht dargestellten Übertragungselement ausgebildet.

Das Dämpfungselement ist in Figur 2 in Ausgangsstellung, d. h. in der Neutralstellung des nicht dargestellten Übertragungselementes, abgebildet. Das Rollelement 12 greift dabei in eine Vertiefung 15. Mit 16 bzw. 17 sind die Konturlinien gekennzeichnet, die den Querschnitt des ersten Anlaufprofiles 9a entlang der Linie begrenzen, auf welcher das Rollelement 12 bei Bewegungen des Übertragungselementes gegen einen Anschlag abrollt. Die Konturlinien 16, 17 steigen ausgehend von der Vertiefung 15 nach außen gerichtet an. Dabei verlaufen die Konturlinien 16, 17 anfangs rampenartig, d. h. in Form einer geneigten Ebene, und gehen dann im weiteren Verlauf in eine Krümmung 16a über. Die Krümmung 16a ist progressiv ansteigend ausgebildet und anfangs durch den Radius R gekennzeichnet.

Figur 3 zeigt eine Draufsicht des Blechteiles 9 mit dem Anlaufprofil 9a. Mit der Strichpunktlinie sind die Konturlinie 16, 17 angedeutet. Es ist aus Figur 4 ersichtlich, dass das Rollelement 12 in einer Längsrille 18 in Längsrichtung geführt ist. Bei Verdrehen des Übertragungselementes steigt das Rollelement 12 an den Flanken 18a bzw. 18b auf und bewegt sich aus der Längsrille 18 heraus.

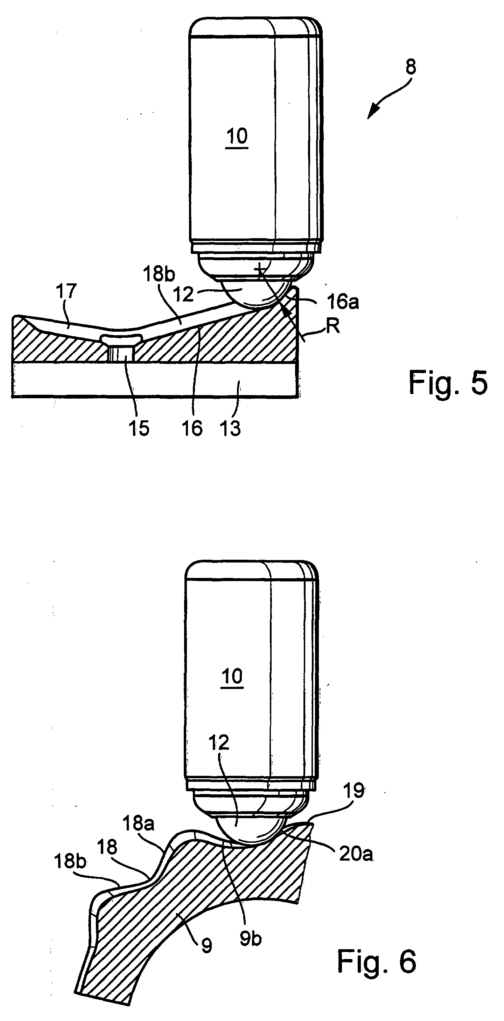

Figur 5 zeigt das Ausführungsbeispiel des Dämpfungselementes 8 nach Figur 2, wobei das Rollelement 12 in seiner Endposition auf dem Anlaufprofil 9a dargestellt ist. Das Rollelement 12 schmiegt sich in den Radius R der Krümmung 16a. In dieser Stellung steht das Übertragungselement in einer Endlage. In dieser Endlage liegt das Übertragungselement entweder an einem gesonderten und nicht dargestellten Anschlag an oder liegt durch das sich in die Krümmung 16a schmiegende Rollelement 12 auf Anschlag. Im letztgenannten Fall ist die Krümmung 16a des Anlaufprofiles 9a gleichzeitig der Anschlag für diese Endlage des Übertragungselementes.

Figur 6 zeigt das Dämpfungselement 8 in einer weiteren Endlage des Rollelementes 12. Diese Endlage wird durch das Rollelement 12 eingenommen, wenn es aus der Endlage nach Figur 5 entlang der in Figur 3 mit 19 gekennzeichneten Konturlinie über die Flanke 18a der Längsrille 18 in eine Vertiefung 20 eintaucht. Die Flanke 18a der Vertiefung 20 ist durch die Konturlinie 19 des zweiten Anlaufprofiles 9b geschnitten. Das Rollelement 12 rollt bei Schwenken des Blechteiles 9 anfangs aus der Längsrille 18 über die Flanke 18a in die Vertiefung 20 entlang der Konturlinie 19. Wird das Blechteil 9 weiter verdreht, bewegt sich das Übertragungselement auf einen nicht dargestellten Anschlag zu. Das Rollelement 12 steigt an der Flanke 20a auf und folgt weiter der inzwischen progressiv ansteigenden Konturlinie 19 bis das Übertragungselement seine Endlage erreicht hat.

### Bezugszahlen

- 1: Schaltvorrichtung
- 2: Schaltwelle
- 2a: Längsmittelachse
- 3: Kulissenführung
- 3a: Kulisse
- 3b: Anschlag
- 3c: Anschlag
- 3d: Anschlag
- 4: Hebel
- 5: Führung
- 6: Schaltfinger
- 7: Stift
- 8: Dämpfungselement
- 9: Blechteil
- 9a: erstes Anlaufprofil
- 9b: zweites Anlaufprofil
- 10: Arretierung
- 11: Bolzen
- 12: Rollelement
- 13: Sitz
- 14: Feder
- 15: Vertiefung
- 16: Konturlinie
- 16a: Krümmung
- 17: Konturlinie
- 18: Längsrille
- 18a: Flanke
- 18b: Flanke
- 19: Konturlinie
- 20: Vertiefung

## Patentansprüche

1. Schaltvorrichtung (1) eines Wechselgetriebes mit einem längsverschiebbar und/oder um seine Längsmittelachse schwenkbaren Übertragungselement zum Übertragen von Schaltbewegungen, wobei die Schaltvorrichtung mit zumindest einem ersten Anlaufprofil (9a, 9b) versehen ist, auf welchem ein gegen das Anlaufprofil federnd vorgespanntes Rollelement (12) abrollt, wobei, die Schaltvorrichtung mit wenigstens einem die Bewegungen des Übertragungsgliedes begrenzende ersten Anschlage (16a) versehen ist, wobei das Übertragungselement wenigstens durch Längsverschiebung oder Schwenken um seine Längsmittelachse (2a) in mindestens eine Endlage gegen den Anschlag zum Wechselgetriebe bewegbar ist, so daß das Rollelement auf wenigstens einer Konturlinie (16, 19) des Anlaufprofils (9a, 9b) abläuft und in der Endlage gegen den Anschlag fährt, wobei die Schaltvorrichtung (1) wenigstens ein Dämpfungselement (8) aufweist, welches aus zumindest dem Anlaufprofil (9a, 9b) und aus mindestens dem federnd gegen das Anlaufprofil (9a, 9b) vorgespannten Rollelement (12) gebildet ist, **dadurch gekennzeichnet, dass** das Anlaufprofil (9a, 9b) den Anschlag aufweist, wobei das Anlaufprofil (9a, 9b) zumindest entlang einer ersten Linie, auf welcher das Rollelement (12) bei Bewegung des Übertragungslementes gegen den Anschlag abrollt, durch die Konturlinie (16, 19) begrenzt ist und dabei die Konturlinie (16, 19) in Abrollrichtung des Rollelementes (12) in Richtung des Anschlages ansteigend verläuft.

2. Schaltvorrichtung nach Anspruch 1, **dadurch gekennzeichnet, dass** die Konturlinie (19) progressiv ansteigt.

3. Schaltvorrichtung nach Anspruch 1, **dadurch gekennzeichnet, dass** die Konturlinie (16) rampenartig verläuft sowie an ihrem Ende in einer nach außen verlaufenden Krümmung (16a) ausläuft, die den Anschlag bildet.

4. Schaltvorrichtung nach Anspruch 3, **dadurch gekennzeichnet, dass** die Krümmung (16a) durch einen Radius beschrieben ist, welcher gleich oder größer dem Rollradius des Rollelementes (12) in Abrollrichtung ist.

5. Schaltvorrichtung nach Anspruch 1, **dadurch gekennzeichnet, dass** das Anlaufprofil (9a, 9b) in einem durch einen Umformprozess gestaltetem Blechteil (9) ausgebildet ist.

6. Schaltvorrichtung nach Anspruch 1, **dadurch gekennzeichnet, dass** das Dämpfungselement (8) durch das erste Anlaufprofil (9a), ein zweites Anlaufprofil (9b) und das federnd gegen die Anlaufprofile (9a, 9b) vorgespannte Rollelement (12) gebildet ist, dass das erste Anlaufprofil (9a) zumindest in Längsrichtung entlang der ersten Linie, auf welcher das Rollelement (12) bei Längsbewegungen des Übertragungselementes gegen den ersten Anschlag abrollt, und dass das zweite Anlaufprofil (9b) zumindest in einr Schwenkrichtung entlang einer zweiten Linie, auf welcher das Rollelement (12) bei Schwenkbewegungen des Übertragungselementes gegen einen zweiten Anschlag abrollt, durch eine in Abrollrichtung ansteigend verlaufende Konturlinie (19) begrenzt ist.

7. Schaltvorrichtung nach Anspruch 1 oder 6, **dadurch gekennzeichnet, dass** das Rollelement (12) eine Kugel ist.

## Claims

1. Shift device (1) of a variable-speed transmission, with a transmission element for the transmission of shifting movements, the said transmission element being longitudinally displaceable and/or pivotable about its longitudinal mid-axis, the shift device being provided with at least one first run-off profile (9a, 9b), on which a rolling element (12) prestressed resiliently towards the run-on profile rolls, the shift device being provided with at least one first stop (16a) limiting the movements of the transmission element, the transmission element being capable of being moved, at least by longitudinal displacement or pivoting about its longitudinal mid-axis (2a), into at least one end position against the stop to the variable-speed transmission, so that the rolling element runs on at least one contour line (16, 19) of the run-on profile (9a, 9b) and moves into the end position against the stop, the shift device (1) having at least one damping element (8) which is formed from at least the run-on profile (9a, 9b) and from at least the rolling element (12) prestressed resiliently towards the run-on profile (9a, 9b), **characterized in that** the run-on profile (9a, 9b) has the stop, the run-on profile (9a, 9b) being limited by the contour line (16, 19), at least along a first line on which the rolling element (12) rolls during the movement of the transmission element towards the stop, and, at the same time, the contour line (16, 19) running so as to rise in the direction of the stop in the rolling direction of the rolling element (12).

2. Shift device according to Claim 1, **characterized in that** the contour line (19) rises progressively.

3. Shift device according to Claim 1, **characterized in that** the contour line (16) runs in a ramp-like manner and terminates at its end in an outwardly running curvature (16a) which forms the stop.

4. Shift device according to Claim 3, **characterized in that** the curvature (16a) is described by a radius which is equal to or greater than the rolling radius of the rolling element (12) in the rolling direction.

5. Shift device according to Claim 1, **characterized in that** the run-on profile (9a, 9b) is formed in a sheet-metal part (9) configured by means of a forming process.

6. Shift device according to Claim 1, **characterized in that** the damping element (8) is formed by the first run-on profile (9a), a second run-on profile (9b) and the rolling element (12) prestressed resiliently towards the run-on profiles (9a, 9b), **in that** the first run-on profile (9a) is limited, at least in a longitudinal direction, along the first line on which the rolling element (12) rolls during longitudinal movements of the transmission element towards the first stop, and **in that** the second run-on profile (9b) is limited, at least in a pivoting direction, along a second line on which the rolling element (12) rolls during pivoting movements of the transmission element towards a second stop, by a contour line (19) running so as to rise in the rolling direction.

7. Shift device according to Claim 1 or 6, **characterized in that** the rolling element (12) is a ball.

## Revendications

1. Dispositif de changement de vitesse (1) d'une boîte de vitesses, avec un élément de transmission apte à coulisser en longueur et/ou à pivoter autour de son axe longitudinal central pour la transmission des déplacements de changement de vitesse, le dispositif de changement de vitesse étant doté d'au moins un premier profil en biseau (9a, 9b) sur lequel roule un élément de roulement (12) précontraint élastiquement contre le profil en biseau, le dispositif de changement de vitesse étant doté d'au moins une première butée (16a) qui limite les déplacements de l'élément de transmission, l'élément de transmission pouvant être déplacé vers la boîte de vitesses au moins par coulissement longitudinal ou par pivotement autour de son axe longitudinal central (2a) en au moins une position d'extrémité située contre la butée, de sorte que l'élément de roulement se déplace sur au moins une ligne de contour (16, 19) du profil en biseau (9a, 9b) et se déplace dans la position d'extrémité située contre la butée, le dispositif de changement de vitesse (1) présentant au moins un élément d'amortissement (8) qui est formé par au moins le profil en biseau (9a, 9b) et au moins l'élément de roulement (12) précontraint élastiquement contre le profil en biseau (9a, 9b), **caractérisé en ce que** le profil en biseau (9a, 9b) présente la butée, le profil en biseau (9a, 9b) étant délimité par la ligne de contour (16, 19) au moins le long d'une première ligne sur laquelle l'élément de roulement (12) roule vers la butée lors du déplacement de l'élément de transmission, la ligne de contour (16, 19) remontant vers la butée dans la direction de roulement de l'élément de roulement (12).

2. Dispositif de changement de vitesse selon la revendication 1, **caractérisé en ce que** la ligne de contour (19) remonte progressivement.

3. Dispositif de changement de vitesse selon la revendication 1, **caractérisé en ce que** la ligne de contour (16) est en pente et se termine à son extrémité par une courbure (16a) vers l'extérieur, qui forme la butée.

4. Dispositif de changement de vitesse selon la revendication 3, **caractérisé en ce que** la courbure (16a) est décrite par un rayon égal ou supérieur au rayon de roulement de l'élément de roulement (12) dans la direction du roulement.

5. Dispositif de changement de vitesse selon la revendication 1, **caractérisé en ce que** le profil en biseau (9a, 9b) est formé d'une pièce de tôle (9) mise en forme par une opération de formage.

6. Dispositif de changement de vitesse selon la revendication 1, **caractérisé en ce que** l'élément d'amortissement (8) est formé par le premier profil en biseau (9a), un deuxième profil en biseau (9b) et l'élément de roulement précontraint élastiquement contre les profils en biseau (9a, 9b), **en ce qu'**au moins dans la direction longitudinale, le long de la première ligne sur laquelle l'élément de roulement (12) roule vers la première butée lors des déplacements longitudinaux de l'élément de transmission, le premier profil en biseau (9a) est délimité par une ligne de contour (19) qui remonte dans la direction du roulement et **en ce qu'**au moins dans une direction de pivotement le long d'une deuxième ligne sur laquelle l'élément de roulement (12) roule vers une deuxième butée lors des déplacements de pivotement de l'élément de transmission, le deuxième profil en biseau (9b) est délimité par une ligne de contour (19) qui remonte dans la direction du roulement.

7. Dispositif de changement de vitesse selon la revendication 1 ou 6, **caractérisé en ce que** l'élément de roulement (12) est une sphère.
